# EUROPEAN PATENT APPLICATION

(11) **EP 4 760 871 A1**
(43) Date of publication of application: **17.06.2026**
(21) Application number: 25213526.4
(22) Date of filing: 05.11.2025
(51) Int. Cl.: H01M 10/613, H01M 10/625, H01M 10/647, H01M 10/6555, H01M 10/6567, H01M 50/209, H01M 50/224, B60L 50/64

(54) **BATTERY APPARATUS**

(30) Priority: 11.12.2024 JP 2024217094
(71) Applicant: TOYOTA JIDOSHA KABUSHIKI KAISHA, Toyota-shi, Aichi-ken 471-8571 (JP)
(72) Inventor: KOGA, Tsuyoshi, Toyota-shi, 471-8571 (JP)
(74) Representative: TBK

(57) **Abstract**

A battery apparatus (20; 100; 150; 160) includes a first battery module (45; 103) including a first battery stack (50; 105) having a plurality of first battery cells (52) stacked in a predetermined direction and a first heat exchanger (64; 110; 165) configured to exchange heat with the first battery stack (50; 105), a second battery module (80; 135) including a second battery stack (82; 137) having a plurality of second battery cells (52) stacked in the predetermined direction, and a heat conductive member (75) configured to be in contact with the first heat exchanger (64; 110; 165) and the second battery module (80; 135).

## Description

### BACKGROUND OF THE INVENTION

### 1. Field of the Invention

The invention relates to a battery apparatus.

### 2. Description of Related Art

Japanese Unexamined Patent Application Publication (Translation of PCT Application) No. 2024-500505 (JP 2024-500505 A) describes a battery apparatus that includes a plurality of battery modules each having a plurality of battery cells arranged in a horizontal direction. In this battery apparatus, the battery modules are arranged in an up and down direction.

### SUMMARY OF THE INVENTION

The battery apparatus of JP 2024-500505 A has room for improvement in making it difficult for heat generated in any of the battery cells of any of the battery modules to be transferred to adjacent battery cells.

The invention provides a battery apparatus capable of making it difficult for heat generated in any of battery cells included in a plurality of battery modules to be transferred to adjacent battery cells.

A battery apparatus of a first aspect includes a first battery module including a first battery stack having a plurality of first battery cells stacked in a predetermined direction, and a first heat exchanger configured to exchange heat with the first battery stack, a second battery module including a second battery stack having a plurality of second battery cells stacked in the predetermined direction, and a heat conductive member configured to be in contact with the first heat exchanger and the second battery module.

With the battery apparatus of the first aspect, heat generated in each of the first battery cells of the first battery module is transferred to the first heat exchanger, and part of the heat can be absorbed by the first heat exchanger. Furthermore, the heat of the first heat exchanger is transferred to the second battery stack through the heat conductive member. Therefore, it is possible to make it difficult for heat generated in any of the battery cells included in the first battery module to be transferred to the adjacent battery cells.

In a battery apparatus of a second aspect, in the first aspect, the second battery module may include a second heat exchanger configured to exchange heat with the second battery stack, and the heat conductive member may be configured to be in contact with the first heat exchanger and the second heat exchanger.

With the battery apparatus of the second aspect, heat generated in each of the second battery cells of the second battery module is transferred to the second heat exchanger, and part of the heat can be absorbed by the second heat exchanger. Furthermore, the heat of the second heat exchanger is transferred to the first heat exchanger through the heat conductive member. Furthermore, the heat of the first heat exchanger is transferred to the second heat exchanger through the heat conductive member. Therefore, it is possible to make it difficult for heat generated in any of the battery cells included in the first battery module or the second battery module to be transferred to the adjacent battery cells.

In a battery apparatus of a third aspect, in the first aspect of the second aspect, the first battery module may include a pair of first end plates respectively disposed on both ends of the first battery stack, the first battery cells may be sandwiched by the pair of first end plates, and the first heat exchanger may be connected to each of the pair of first end plates.

With the battery apparatus of the third aspect, the heat of the first heat exchanger is transferred to the first end plates. As a result, the heat of the first heat exchanger can be dissipated from the first end plates. Therefore, it is possible to make it difficult for heat generated in any of the battery cells included in the first battery module to be transferred to the adjacent battery cells.

In a battery apparatus of a fourth aspect, in the third aspect, the first heat exchanger may include a first case made of metal and a first refrigerant that is a liquid provided within the first case, and both ends of the first case may be respectively connected to the pair of first end plates.

With the battery apparatus of the fourth aspect, the first heat exchanger includes a first case made of metal, and both ends of the first case are respectively connected to the pair of first end plates. Therefore, the first heat exchanger can be connected to the pair of first end plates such that the pair of first end plates sandwiches all the first battery cells. Furthermore, since the first heat exchanger includes a first case made of metal and a first refrigerant that is a liquid provided within the first case, the first heat exchanger can exhibit a good heat exchange function.

A battery apparatus of a fifth aspect, in the third aspect or the fourth aspect, may include a battery case that houses the first battery module and the second battery module, and the first end plates may be connected to the battery case.

With the battery apparatus of the fifth aspect, the heat of the first end plates is transferred to the battery case. As a result, the heat transferred to the battery case is dissipated from the battery case. Therefore, compared to when the first end plates are not connected to the battery case, it is possible to make it difficult for heat generated in any of the battery cells included in the first battery module to be transferred to the adjacent battery cells.

In a battery apparatus of a sixth aspect, in any one of the first aspect to the fifth aspect, the second battery module may include a pair of second end plates respectively disposed on both ends of the second battery stack, the second battery cells may be sandwiched by the pair of second end plates, and the pair of second end plates may be respectively connected to the pair of first end plates.

With the battery apparatus of the sixth aspect, the heat of the first end plates is transferred to the second end plates. As a result, the heat transferred to the second end plates is dissipated from the second end plates. Therefore, compared to when the first end plates are not connected to the second end plates, it is possible to make it difficult for heat generated in any of the battery cells included in the first battery module to be transferred to the adjacent battery cells.

In a battery apparatus of a seventh aspect, in the sixth aspect, the second battery module may include a second heat exchanger configured to exchange heat with the second battery stack, the second heat exchanger may include a second case made of metal and a second refrigerant that is a liquid provided within the second case, and both ends of the second case may be respectively connected to the pair of second end plates.

With the battery apparatus of the seventh aspect, the second heat exchanger includes a second case made of metal, and both ends of the second case are respectively connected to the pair of second end plates. Therefore, the second heat exchanger can be connected to the pair of second end plates such that the pair of second end plates sandwiches all the second battery cells. Furthermore, since the second heat exchanger includes a second case made of metal and a second refrigerant that is a liquid provided within the second case, the second heat exchanger can exhibit a good heat exchange function.

In a battery apparatus of an eighth aspect, in the fourth aspect, each of the first battery cells may have a solid electrolyte.

When each of the first battery cells has a solid electrolyte, the pair of first end plates needs to secure the first battery cells with a force greater than when each of the first battery cells has a liquid electrolyte. With the battery apparatus of the eighth aspect, the first case made of metal, connected to each of the pair of first end plates, can pull the pair of first end plates closer with a force greater than that of a thin plate member (securing member). Therefore, with the battery apparatus of the eighth aspect, the pair of first end plates can secure the first battery cells each having a solid electrolyte, with a strong force.

In a battery apparatus of a ninth aspect, in the seventh aspect, each of the second battery cells may have a solid electrolyte.

When each of the second battery cells has a solid electrolyte, the pair of second end plates needs to secure the second battery cells with a force greater than when each of the second battery cells has a liquid electrolyte. With the battery apparatus of the ninth aspect, the second case made of metal, connected to each of the pair of second end plates, can pull the pair of second end plates closer with a force greater than that of a thin plate member (securing member). Therefore, with the battery apparatus of the ninth aspect, the pair of second end plates can secure the second battery cells each having a solid electrolyte, with a strong force.

In a battery apparatus of a tenth aspect, in the sixth aspect, the first battery module and the second battery module may be arranged in an orthogonal direction orthogonal to the predetermined direction, and the battery apparatus may include a first fixing member configured to fix one of the first end plates and one of the second end plates, facing in the orthogonal direction, and a second fixing member configured to fix the other one of the first end plates and the other one of the second end plates, facing in the orthogonal direction.

With the battery apparatus of the tenth aspect, the first battery module and the second battery module can be firmly integrated without using a member to separate the first battery module and the second battery module around the heat conductive member. As a result, an increase in the size of the battery apparatus in the direction in which the first battery module and the second battery module are arranged is suppressed.

In a battery apparatus of an eleventh aspect, in any one of the first aspect to the tenth aspect, the heat conductive member may be an adhesive.

With the battery apparatus of the eleventh aspect, the heat conductive member can be imparted with a function to fix the first heat exchanger and the second heat exchanger.

As described above, the battery apparatus according to the aspects of the invention has an excellent advantageous effect in making it difficult for heat generated in any of battery cells included in a plurality of battery modules to be transferred to adjacent battery cells.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic sectional view of an electrified vehicle equipped with a battery apparatus according to a first embodiment;
FIG. 2 is a schematic exploded perspective view of the battery apparatus;
FIG. 3 is a schematic sectional view of the battery apparatus according to the first embodiment;
FIG. 4 is a schematic sectional view taken along the line IV-IV in FIG. 3;
FIG. 5 is a schematic exploded perspective view of the battery apparatus;
FIG. 6 is a schematic sectional view of a battery apparatus according to a second embodiment;
FIG. 7 is a schematic sectional view taken along the line VII-VII in FIG. 6;
FIG. 8 is a schematic sectional view, corresponding to FIG. 3, of a battery apparatus according to a first modification; and
FIG. 9 is a schematic sectional view, corresponding to FIG. 4, of a battery apparatus according to a second modification.

### DETAILED DESCRIPTION OF EMBODIMENTS

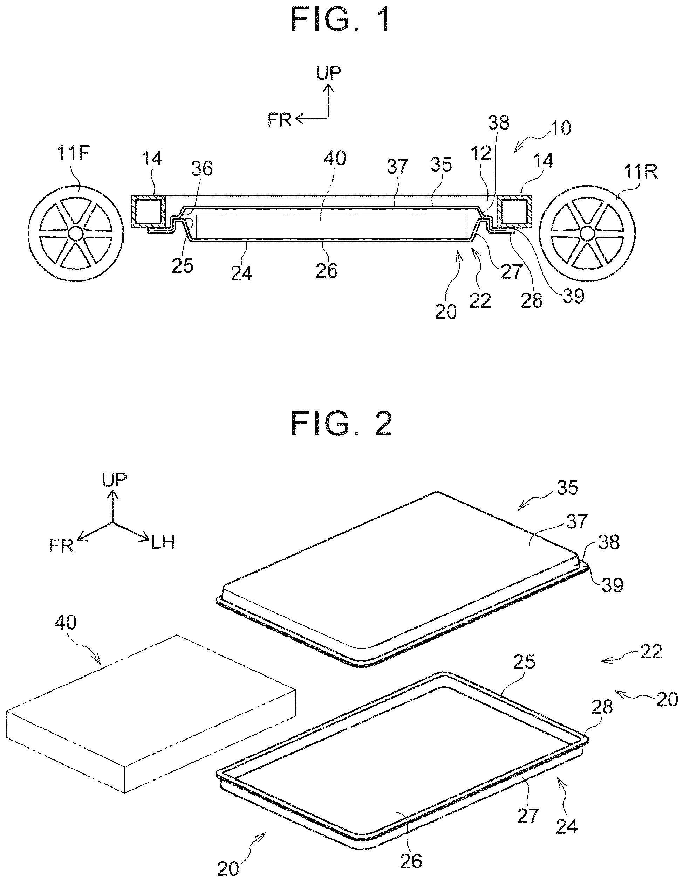

Hereinafter, a battery apparatus 20 according to a first embodiment will be described with reference to FIG. 1 to FIG. 5. The arrow UP, the arrow FR, and the arrow LH in each drawing respectively indicate an upper side in a vehicle up and down direction, a front side in a vehicle front and rear direction, and a left side in a vehicle width direction.

As shown in FIG. 1 and FIG. 2, the battery apparatus 20 of the first embodiment is mounted on a vehicle (electrified vehicle) 10. The vehicle 10 of the first embodiment is a battery electric vehicle (BEV). The vehicle 10 may be an electrified vehicle different from a battery electric vehicle. For example, the vehicle 10 may be a hybrid electric vehicle (HEV) or a plug-in hybrid electric vehicle (PHEV).

The vehicle 10 includes a pair of right and left front wheels 11F, a pair of right and left rear wheels 11R, a pair of right and left rockers 12 (only one of them is shown in FIG. 1), and a pair of front and rear cross members 14. The rockers 12 are part of a vehicle body framework member and extend in the vehicle front and rear direction. The cross members 14 are part of the vehicle body framework member and extend in a right and left direction. Both ends of each of the cross members 14 are respectively fixed to the right and left rockers 12.

The battery apparatus 20 includes a battery case 22 and a battery pack 40. Electric power from the battery apparatus 20 is supplied to an electric motor (not shown) that is a drive unit of the vehicle 10.

As shown in FIG. 1 and FIG. 2, the battery case 22 includes a lower case 24 and an upper case 35 that are made of metal.

The lower case 24 is a hollow body with an opening 25 formed at the upper side. The lower case 24 has a bottom plate 26, a peripheral wall 27, a peripheral flange 28, and support members 30. The planar shape of the peripheral wall 27 is an annular shape, and the lower end of the peripheral wall 27 is connected to the outer periphery of the bottom plate 26. The planar shape of the peripheral flange 28 is an annular shape, and the inner periphery of the peripheral flange 28 is connected to the upper end of the peripheral wall 27.

The upper case 35 is a hollow body with an opening 36 formed at the lower side. The upper case 35 has a top plate 37, a peripheral wall 38, and an peripheral flange 39. The planar shape of the peripheral wall 38 is an annular shape, and the upper end of the peripheral wall 38 is connected to the outer periphery of the top plate 37. The planar shape of the peripheral flange 39 is an annular shape, and the inner periphery of the peripheral flange 39 is connected to the lower end of the peripheral wall 38.

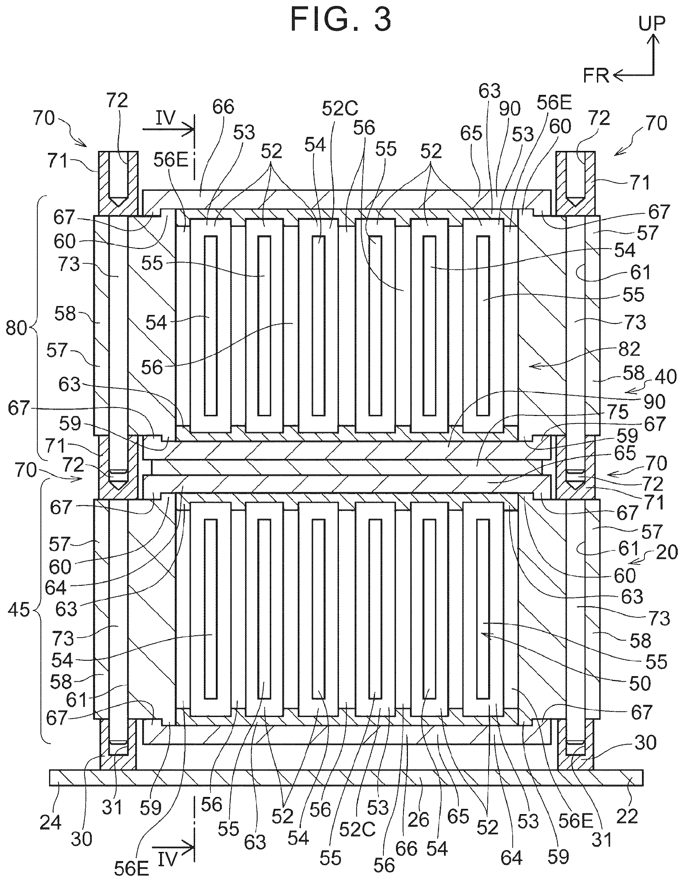

As shown in FIG. 3 to FIG. 5, the front and rear support members 30 that are part of the lower case 24 are fixed to the upper surface of the bottom plate 26 of the lower case 24. Each of the support members 30 has a pair of right and left internal threaded holes 31 at the upper side.

The battery pack 40 is provided on the front and rear support members 30. The battery pack 40 includes a battery module (first battery module) 45 and a battery module (second battery module) 80.

The battery module 45 includes a battery stack (first battery stack) 50, a pair of front and rear end plates 57, an adhesive 63, a pair of upper and lower heat exchangers (first heat exchanger) 64, and four fixing bolts (first fixing members) (second fixing members) 70.

As shown in FIG. 3, the battery stack 50 includes a plurality of battery cells (first battery cells) 52 arranged in the front and rear direction, a plurality of insulating members 56 each provided between any adjacent battery cells 52, and a plurality of busbars (not shown). In FIG. 3, six battery cells 52 are illustrated; however, the number of battery cells 52 included in the battery stack 50 may be more than six or may be less than six. There is no limit to the number of battery cells 52 included in the battery stack 50, and the same applies to a battery module 80 (described later). External electrodes 54, 55 are respectively provided on both right and left sides of each cell case 53 made of metal. The cell case 53 forms the outer shape of the battery cell 52 that is a lithium ion battery. A liquid electrolyte (electrolytic solution, not shown) is provided inside the cell case 53. The external electrode 54 on one side of the cell case 53 is a positive electrode, and the external electrode 55 on the other side is a negative electrode. The battery cells 52 are arranged in the front and rear direction such that the external electrode 54 and the external electrode 55 are alternately arranged on the left side of the battery module 45 (see FIG. 3) and the external electrode 54 and the external electrode 55 are alternately arranged on the right side of the battery module 45. Furthermore, the external electrode 54 and the external electrode 55 adjacent in the front and rear direction are electrically connected by the busbar. Additionally, the insulating member 56 is provided between any adjacent battery cells 52. Additionally, an insulating member 56E is provided immediately before the battery cell 52 positioned at the frontmost, and an insulating member 56E is provided immediately after the battery cell 52 positioned at the rearmost.

The end plates (first end plates) 57 are respectively provided immediately before the insulating member 56E positioned at the frontmost and immediately after the insulating member 56E positioned at the rearmost. The front and rear end plates 57 are symmetrical with each other in the front and rear direction. The end plate 57 has a substantially rectangular parallelepiped body 58, a lower projection 59 provided on the lower surface of the body 58, and an upper projection 60 provided on the upper surface of the body 58. The lower projection 59 and the upper projection 60 extend in the right and left direction. The body 58 has a pair of right and left through-holes 61 that penetrate in the up and down direction.

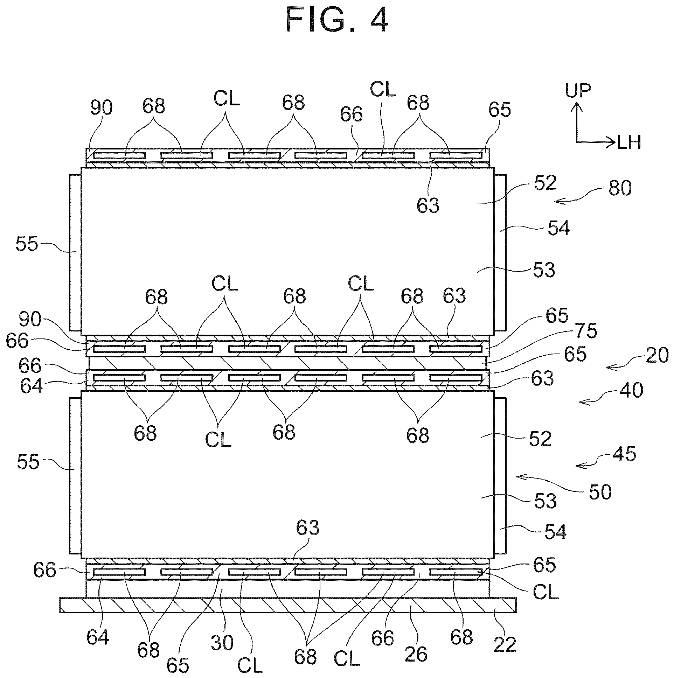

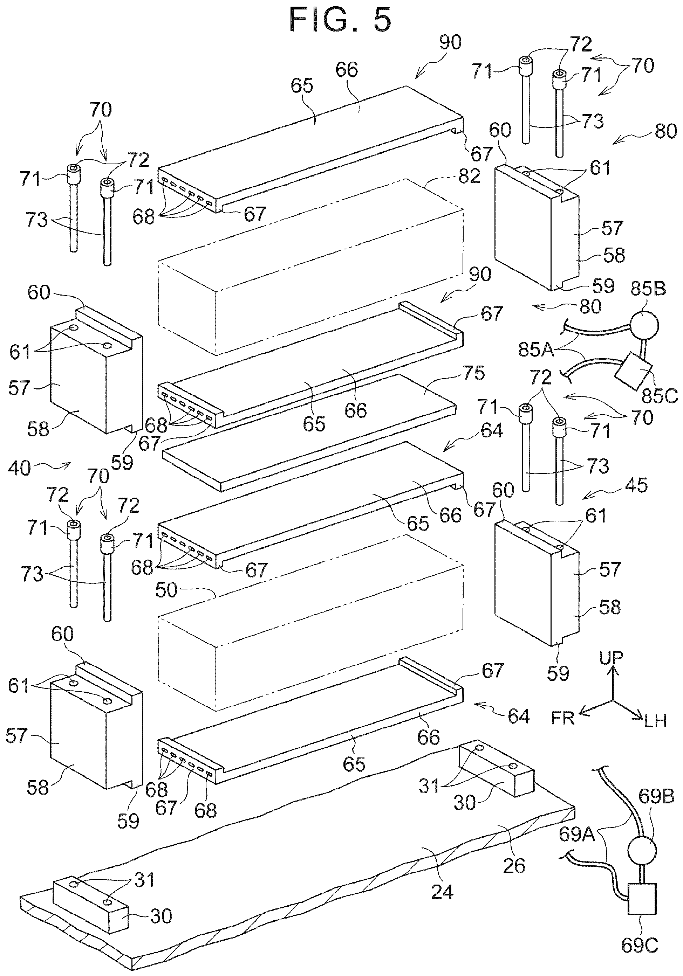

The upper and lower heat exchangers 64 are symmetrical with each other in the up and down direction. The heat exchanger 64 includes a securing member (first case) 65 that is an integrally molded product made of metal. The coefficient of thermal conductivity of the securing member 65 is high. For example, the coefficient of thermal conductivity of the securing member 65 is higher than the coefficient of thermal conductivity of the insulating member 56. The securing member 65 has a thick plate-shaped body 66 having a rectangular shape of which the planar shape has a front-to-rear dimension greater than a left-to-right dimension, and a pair of engaging projections 67 respectively provided at both ends of one side of the body 66 in the thickness direction of the body 66. Each of the engaging projections 67 extends in the right and left direction across the entire width of the body 66. The left-to-right dimension of the body 66 (engaging projection 67) is approximately the same as the left-to-right dimension of the end plate 57 (the lower projection 59 and the upper projection 60). As shown in FIG. 4 and FIG. 5, a plurality of internal channels 68 penetrates through the thick plate-shaped body 66 in the front and rear direction. Both ends of a tube member 69A (see FIG. 5) are respectively connected to the front end opening and rear end opening of each of the internal channels 68. An electric pump 69B and a temperature regulator 69C are connected in the middle of the tube member 69A. Furthermore, the internal channels 68 and the inside of the tube member 69A are filled with a refrigerant (first refrigerant) CL (see FIG. 4) that is a non-conductive liquid. When the electric pump 69B operates, the refrigerant CL circulates through the internal channels 68 and the inside of the tube member 69A in a predetermined direction. Furthermore, the temperature regulator 69C is capable of drawing heat from the refrigerant CL or giving heat to the refrigerant CL.

As shown in FIG. 3 and FIG. 4, the adhesive 63 is applied to almost the entire upper surface of the body 66 of the lower securing member 65, and the bottom of the battery stack 50 is mounted on the adhesive 63. The adhesive 63 has a good thermal conductivity. In other words, the thermal conductivity of the adhesive 63 is higher than the thermal conductivity of the securing member 65. The adhesive 63 is applied to almost the entire lower surface of the body 66 of the upper securing member 65, and the adhesive 63 and the body 66 are mounted on the upper surface of the battery stack 50. Furthermore, the front engaging projections 67 of the upper and lower securing members 65 respectively engage from the front with the upper projection 60 and lower projection 59 of the front end plate 57, and the rear engaging projections 67 of the upper and lower securing members 65 respectively engage from the rear with the upper projection 60 and lower projection 59 of the rear end plate 57. At this time, the front-to-rear length of the body 66 of each of the upper and lower securing members 65 is slightly longer than that in a free state. In other words, the engaging projections 67 of each of the upper and lower securing members 65 applies a force to the front and rear end plates 57 in a direction to compress the battery stack 50 in the front and rear direction. As a result, the battery stack 50 is firmly sandwiched by the front and rear end plates 57, and the upper and lower cured adhesives 63 fix the battery cells 52, the insulating members 56, 56E, and the upper and lower securing members 65 to each other. Therefore, the battery cells 52 and the insulating members 56, 56E that make up the battery stack 50 are held in an integrated state.

As shown in FIG. 3, the bodies 58 of the front and rear end plates 57 integrated with the battery stack 50 and the securing members 65 are respectively mounted on the upper surfaces of the corresponding support members 30. As a result, the internal threaded holes 31 of the front support members 30 respectively communicate with the through-holes 61 of the front end plate 57 in the up and down direction, and the internal threaded holes 31 of the rear support members 30 respectively communicate with the through-holes 61 of the rear end plate 57 in the up and down direction.

As shown in FIG. 3, the fixing bolts 70 are respectively inserted from above into the through-holes 61 of the front end plate 57. Each of the fixing bolts 70 is an integrally molded product made of metal. Each of the fixing bolts 70 has a cylindrical head part 71 and an external threaded part 73 that extends linearly downward from the lower end of the head part 71 and that is smaller in diameter than the head part 71. The head part 71 has an internal threaded hole 72 at the upper side.

The external threaded parts 73 of the fixing bolts 70 are respectively inserted into the right and left through-holes 61 of the front end plate 57. The external threaded parts 73 of the right and left fixing bolts 70 respectively pass through the corresponding through-holes 61 downward and are screwed into the internal threaded holes 31 of the front support member 30. Furthermore, in a state where the lower surface of the body 58 is in contact with the upper surface of the support member 30, the lower surface of the head part 71 of each of the fixing bolts 70 is pressed against the upper surface of the body 58. Similarly, the external threaded parts 73 of the fixing bolts 70 are respectively inserted into the right and left through-holes 61 of the rear end plate 57. The external threaded parts 73 of the right and left fixing bolts 70 respectively pass through the corresponding through-holes 61 downward and are screwed into the internal threaded holes 31 of the rear support member 30. Furthermore, in a state where the lower surface of the body 58 is in contact with the upper surface of the support member 30, the lower surface of the head part 71 of each of the fixing bolts 70 is pressed against the upper surface of the body 58. As a result, the battery module 45 is fixed to the front and rear support members 30. As shown in FIG. 3, the upper end of the head part 71 of each of the fixing bolts 70 is positioned above the upper surface of the body 66 of the upper securing member 65.

As shown in FIG. 3 and FIG. 4, an adhesive (heat conductive member) 75 is applied to almost the entire upper surface of the body 66 of the upper securing member 65. The adhesive 75 is, for example, a urethane adhesive. The adhesive 75 has a good heat conductivity. In other words, the thermal conductivity of the adhesive 75 is higher than the thermal conductivities of the adhesive 63, the securing member 65, and mica.

The battery module 80 includes a battery stack (second battery stack) 82, a pair of front and rear end plates (second end plates) 57, an adhesive 63, a pair of upper and lower heat exchangers (second heat exchanger) 90, and four fixing bolts (first fixing members) (second fixing members) 70.

The battery stack 82 includes a plurality of battery cells (second battery cells) 52 arranged in the front and rear direction, a plurality of insulating members 56 each provided between any adjacent battery cells 52, and a plurality of busbars (not shown). The battery cells 52 are arranged in the front and rear direction such that the external electrode 54 and the external electrode 55 are alternately arranged on the left side of the battery module 80 (see FIG. 3) and the external electrode 54 and the external electrode 55 are alternately arranged on the right side of the battery module 80. Furthermore, the external electrode 54 and the external electrode 55 adjacent in the front and rear direction are electrically connected by the busbar. Additionally, the insulating member 56 is provided between any adjacent battery cells 52. Additionally, an insulating member 56E is provided immediately before the battery cell 52 positioned at the frontmost, and an insulating member 56E is provided immediately after the battery cell 52 positioned at the rearmost.

The end plates 57 are respectively provided immediately before the insulating member 56E positioned at the frontmost and immediately after the insulating member 56E positioned at the rearmost. The front and rear end plates 57 are symmetrical with each other in the front and rear direction.

The upper and lower heat exchangers 90 are symmetrical with each other in the up and down direction. Both ends of a tube member 85A (see FIG. 5) are respectively connected to the front end opening and rear end opening of each of the internal channels 68 of the securing member (second case) 65 of each heat exchanger 90. An electric pump 85B and a temperature regulator 85C are connected in the middle of the tube member 85A. Furthermore, the internal channels 68 and the inside of the tube member 85A are filled with a refrigerant (second refrigerant) CL that is a non-conductive liquid. When the electric pump 85B operates, the refrigerant CL circulates through the internal channels 68 and the inside of the tube member 85A in a predetermined direction. Furthermore, the temperature regulator 85C is capable of drawing heat from the refrigerant CL or giving heat to the refrigerant CL.

As shown in FIG. 3 and FIG. 4, the adhesive 63 is applied to almost the entire upper surface of the body 66 of the lower securing member 65 of the battery module 80, and the bottom of the battery stack 82 is mounted on the adhesive 63. The adhesive 63 is applied to almost the entire lower surface of the body 66 of the upper securing member 65, and the adhesive 63 and the body 66 are mounted on the upper surface of the battery stack 82. Furthermore, the front engaging projections 67 of the upper and lower securing members 65 respectively engage from the front with the upper projection 60 and lower projection 59 of the front end plate 57, and the rear engaging projections 67 of the upper and lower securing members 65 respectively engage from the rear with the upper projection 60 and lower projection 59 of the rear end plate 57. At this time, the front-to-rear length of the body 66 of each of the upper and lower securing members 65 is slightly longer than that in a free state. In other words, the engaging projections 67 of each of the upper and lower securing members 65 applies a force to the front and rear end plates 57 in a direction to compress the battery stack 82 in the front and rear direction. As a result, the battery stack 82 is firmly sandwiched by the front and rear end plates 57, and the upper and lower cured adhesives 63 fix the battery cells 52, the insulating members 56, 56E, and the upper and lower securing members 65 to each other. Therefore, the battery cells 52 and the insulating members 56, 56E that make up the battery stack 82 are held in an integrated state.

As shown in FIG. 3, the bodies 58 of the front and rear end plates 57 integrated with the battery stack 82 and the securing members 65 are mounted on the upper surfaces of the head parts 71 of the fixing bolts 70 of the battery module 45. As a result, the head parts 71 of the front fixing bolts 70 of the battery module 45 respectively communicate in the up and down direction with the through-holes 61 of the front end plate 57 of the battery module 80. Furthermore, the head parts 71 of the rear fixing bolts 70 of the battery module 45 respectively communicate in the up and down direction with the through-holes 61 of the rear end plate 57 of the battery module 80.

As shown in FIG. 3, the fixing bolts 70 are respectively inserted from above into the through-holes 61 of the front end plate 57 of the battery module 80. The external threaded parts 73 of the fixing bolts 70 of the battery module 80 are respectively inserted into the right and left through-holes 61 of the front end plate 57 of the battery module 80. The external threaded parts 73 of the fixing bolts 70 of the battery module 80 respectively pass through the corresponding through-holes 61 downward and are screwed into the internal threaded holes 72 of the head parts 71 of the front fixing bolts 70 of the battery module 45. Similarly, the external threaded parts 73 of the fixing bolts 70 are respectively inserted into the right and left through-holes 61 of the rear end plate 57 of the battery module 80. The external threaded parts 73 of the fixing bolts 70 of the battery module 80 respectively pass through the corresponding through-holes 61 downward and are screwed into the internal threaded holes 72 of the head parts 71 of the rear fixing bolts 70 of the battery module 45. Furthermore, in a state where the lower surface of the body 58 of each of the end plates 57 of the battery module 80 is in contact with the upper surfaces of the head parts 71 of the fixing bolts 70 of the battery module 45, and the lower surfaces of the head parts 71 of the fixing bolts 70 of the battery module 80 are pressed against the upper surface of each of the bodies 58. As a result, the battery module 80 is fixed to the battery module 45 such that the battery module 80 and the battery module 45 are arranged in the up and down direction (orthogonal direction), and the battery pack 40 is completed.

After the battery pack 40 is fixed to the lower case 24 in this way, a seal member (not shown) is provided over the entire upper surface of the peripheral flange 28 of the lower case 24, and the peripheral flange 39 of the upper case 35 is mounted on the upper surface of the peripheral flange 28 and the seal member. Furthermore, a plurality of points of the peripheral flange 28 and a plurality of points of the peripheral flange 39 are fixed by a plurality of fixing members. Thus, the battery apparatus 20 is completed.

The battery case 22 of the battery apparatus 20 with this configuration is supported by the rockers 12 and the cross members 14. In other words, as shown in FIG. 1, in a state where the top plate 37 and peripheral wall 38 of the upper case 35 are positioned in a space surrounded by the rockers 12 and the cross members 14, the peripheral flange 39 is brought into contact from below with the lower surfaces of the rockers 12 and cross members 14. Furthermore, the lower surfaces of the rockers 12 and cross members 14 and a plurality of points of the peripheral flange 28 and peripheral flange 39 are fixed to each other by a plurality of fixing members.

The upper surface of the top plate 37 of the upper case 35 constitutes the floor panel of the vehicle 10. The upper surface of the top plate 37 is covered with a fabric mat (not shown).

### Operation and Advantageous Effects

Next, the operation and advantageous effects of the first embodiment will be described.

For example, assuming a case where the battery cell 52 in the center of the battery stack 50 of the battery module 45 (hereinafter, referred to as battery cell 52C, see FIG. 3) increases in temperature due to internal short-circuit. In this case, heat generated in the battery cell 52C is more easily transferred to the upper and lower adhesives 63 than to the two insulating members 56 adjacent to the battery cell 52C. Therefore, heat generated in the battery cell 52C is easily transferred to the upper and lower heat exchangers 64 (securing members 65) through the upper and lower adhesives 63. When the temperature regulator 69C draws heat from the refrigerant CL flowing through the internal channels 68 and inside of the tube member 69A, part of the heat transferred to the securing members 65 is absorbed by the refrigerant CL. Furthermore, the heat not absorbed by the upper securing member 65 is transferred from the upper securing member 65 to the adhesive 75. The adhesive 75 having a good thermal conductivity transfers the heat to the lower heat exchanger 90 (securing member 65) of the battery module 80, positioned directly on the adhesive 75. In this way, heat generated from the battery cell 52C of the battery module 45 is more easily transferred to the battery module 80 than to the insulating members 56 adjacent to the battery cell 52C and the battery cells 52 adjacent to these insulating members 56. Therefore, the battery apparatus 20 is capable of making it difficult for heat generated in the battery cell 52C of the battery module 45 to be transferred to the other battery cells 52 of the battery module 45.

For example, assuming a case where the battery cell 52 in the center of the battery stack 82 of the battery module 80 (hereinafter, referred to as battery cell 52C, see FIG. 3) increases in temperature due to internal short-circuit. In this case, heat generated in the battery cell 52C is more easily transferred to the upper and lower adhesives 63 than to the two insulating members 56 adjacent to the battery cell 52C. Therefore, heat generated in the battery cell 52C is easily transferred to the upper and lower heat exchangers 90 (securing members 65) through the upper and lower adhesives 63. When the temperature regulator 85C draws heat from the refrigerant CL flowing through the internal channels 68 and inside of the tube member 85A, part of the heat transferred to the securing members 65 is absorbed by the refrigerant CL. Furthermore, the heat not absorbed by the lower securing member 65 is transferred from the lower securing member 65 to the adhesive 75. The adhesive 75 having a good thermal conductivity transfers the heat to the upper heat exchanger 64 (securing member 65) of the battery stack 50 of the battery module 45, positioned directly under the adhesive 75. In this way, heat generated in the battery cell 52C of the battery stack 82 is more easily transferred to the battery module 45 than to the insulating members 56 adjacent to the battery cell 52C and the battery cells 52 adjacent to these insulating members 56. Therefore, the battery apparatus 20 is capable of making it difficult for heat generated in the battery cell 52C of the battery module 80 to be transferred to the other battery cells 52 of the battery module 80.

Furthermore, part of the heat not absorbed by the securing members 65 of the battery modules 45, 80 is transferred from the securing members 65 to the pair of front and rear end plates 57. The heat capacity of the end plate 57 is greater than the heat capacity of the insulating member 56. Therefore, each of the end plates 57 can receive a significant amount of heat from the securing members 65. Furthermore, heat transferred to the end plates 57 is dissipated from the end plates 57.

Furthermore, heat transferred to the end plates 57 of the battery module 45 is transferred to the pair of front and rear support members 30 that are parts of the lower case 24, and then further transferred from the support members 30 to the bottom plate 26 of the lower case 24 having a large heat capacity. As a result, a large amount of heat is absorbed by the bottom plate 26 of the lower case 24, and the peripheral wall 27 and the peripheral flange 28 that connect to the bottom plate 26 and is dissipated from the lower case 24 to the outside.

Furthermore, each of the heat exchangers 64 and the heat exchangers 90 includes the securing member 65 made of metal. Furthermore, the securing members 65 are connected to the pair of end plates 57 such that the pair of end plates 57 sandwiches all the battery cells 52 and the insulating members 56, 56E. In other words, in the battery apparatus 20, the securing members 65 of the heat exchangers 64, 90 are imparted with a heat exchange function and a function of securing the pair of end plates 57. Therefore, compared to when the securing member 65 has only one of the heat exchange function and the function of securing the pair of end plates 57, the number of components reduces, so the battery apparatus 20 can be made compact.

Furthermore, the left-to-right dimension of the body 66 (engaging projection 67) of each securing member 65 is approximately the same as the left-to-right dimension of the end plate 57 (the lower projection 59 and the upper projection 60). In other words, the left-to-right dimension of the body 66 (engaging projection 67) is large. Furthermore, the body 66 made of metal in a thick plate shape allows the pair of end plates 57 to be pulled closer with a greater force than a thin plate-shaped member (securing member). Therefore, compared to when the left-to-right dimension of the body 66 is smaller than the left-to-right dimension of the end plate 57 and the body 66 has a thin plate shape, the securing members 65 allow the pair of end plates 57 to be secured with a greater force. In other words, the securing members 65 can apply a large securing force (pressure) to the battery stack 50 and the battery stack 82.

Furthermore, the battery apparatus 20 can firmly integrate the vertically arranged battery module 45 and battery module 80 using the end plates 57 and the fixing bolts 70. In other words, the battery apparatus 20 can firmly integrate the battery module 45 and the battery module 80 without using a horizontal partition member (not shown) that can be positioned between the upper securing member 65 of the battery module 45 and the lower securing member 65 of the battery module 80. As a result, an increase in the size of the battery apparatus 20 in the up and down direction is suppressed compared to when a partition member is provided. An example of the partition member is a partition plate made up of a mica plate having a flat plate shape.

Furthermore, since the battery apparatus 20 does not include a partition member, it is easy to dispose the adhesive 75 between the upper securing member 65 of the battery module 45 and the lower securing member 65 of the battery module 80. In other words, while the volume of the adhesive 75 is reduced compared to when the battery apparatus 20 includes a partition member, the adhesive 75 can be brought into contact with the upper securing member 65 of the battery module 45 and the lower securing member 65 of the battery module 80.

Furthermore, the adhesive 75 has an adhesion function. Therefore, the adhesive 75 has a fixing function to fix the battery module 45 and the battery module 80, in addition to the heat conduction function. As a result, compared to when the adhesive 75 has only one of the heat conduction function and the fixing function, the number of components is reduced, so the battery apparatus 20 can be made compact.

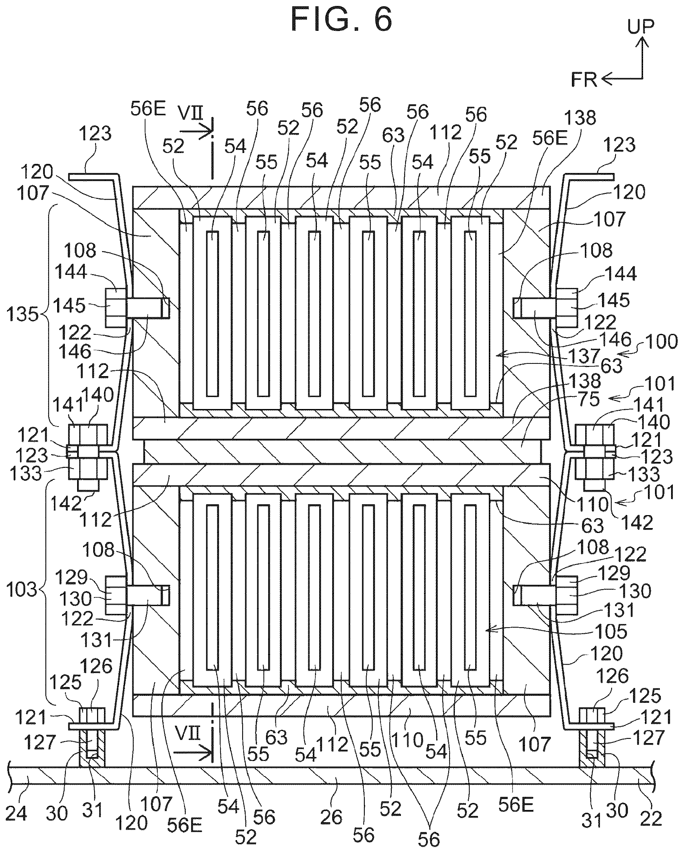

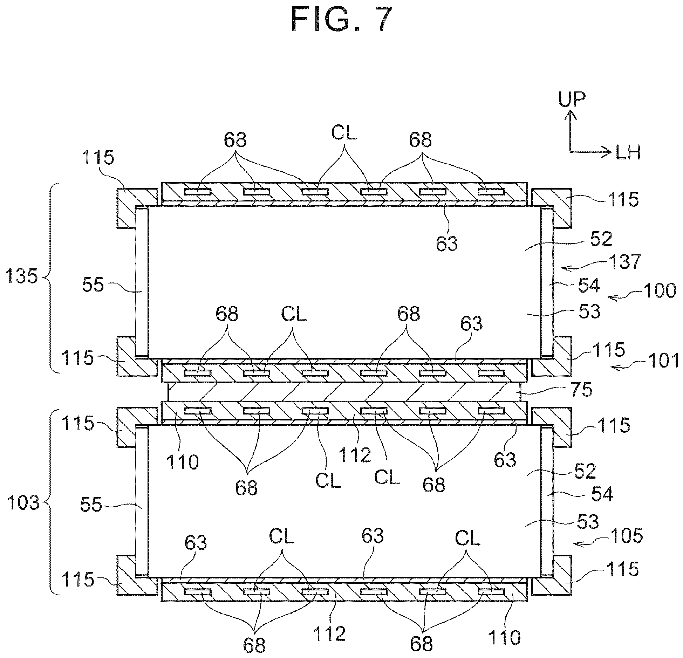

Next, a battery apparatus 100 according to a second embodiment will be described with reference to FIG. 6 and FIG. 7. Like reference signs are assigned to the same members as those of the first embodiment, and the detailed description thereof is omitted.

The battery apparatus 100 of the second embodiment includes a battery pack 101 housed in the battery case 22. The battery pack 101 includes a battery module (first battery module) 103 and a battery module (second battery module) 135.

The battery module 103 includes a battery stack (first battery stack) 105, a pair of front and rear end plates (first end plates) 107, an adhesive (a first cell heat conductive member) 63, a pair of upper and lower heat exchangers (first heat exchanger) 110, four securing bands (first securing member) 115, a pair of front and rear support brackets (first fixing member) (second fixing member) 120, bolts 125, bolts 129, and weld nuts 133.

The battery stack 105 includes a plurality of battery cells (first battery cells) 52 arranged in the front and rear direction, a plurality of insulating members 56 each provided between any adjacent battery cells 52, and a plurality of busbars.

The end plates 107 are respectively provided immediately before the insulating member 56E positioned at the frontmost and immediately after the insulating member 56E positioned at the rearmost. The front and rear end plates 107 are symmetrical with each other in the front and rear direction. Each of the end plates 107 has a substantially rectangular parallelepiped shape. Furthermore, internal threaded holes 108 are respectively formed on the front side of the front end plate 107 and the rear side of the rear end plate 107.

The upper and lower heat exchangers 110 are symmetrical with each other in the up and down direction. The heat exchanger 110 includes a fluid storage case (first case) 112 that is an integrally molded product made of metal. In other words, the fluid storage case 112 has a high coefficient of thermal conductivity. For example, the coefficient of thermal conductivity of the fluid storage case 112 is higher than the coefficient of thermal conductivity of the insulating member 56. The fluid storage case 112 is a thick plate-shaped member having a rectangular shape of which the planar shape has a front-to-rear dimension greater than a left-to-right dimension. As shown in FIG. 7, a plurality of internal channels 68 penetrates through the fluid storage case 112 in the front and rear direction. One ends of tube members (not shown) are respectively connected to the front end openings and rear end openings of the internal channels 68, and the other ends of the tube members are connected to an electric pump (not shown) and a temperature regulator (not shown). Furthermore, the internal channels 68 and the insides of the tube members are filled with a refrigerant that is a non-conductive liquid.

The adhesive 63 is applied to almost the entire upper surface of the lower fluid storage case 112, and the bottom of the battery stack 105 is mounted on the adhesive 63. In other words, the lower fluid storage case 112 and the bottom of the battery stack 105 are fixed by the adhesive 63. The adhesive 63 has a good thermal conductivity. In other words, the thermal conductivity of the adhesive 63 is higher than the thermal conductivity of the fluid storage case 112. The adhesive 63 is applied to almost the entire lower surface of the upper fluid storage case 112, and the adhesive 63 and the fluid storage case 112 are mounted on the upper surface of the battery stack 105. In other words, the upper fluid storage case 112 and the upper part of the battery stack 105 are fixed by the adhesive 63.

As shown in FIG. 7, the battery module 103 includes four securing bands 115 made up of metal plates. The front-to-rear length of each securing band 115 is approximately the same as the distance in the front and rear direction between the front surface of the front end plate 107 and the rear surface of the rear end plate 107. The sectional shape of each securing band 115, orthogonal to the longitudinal direction of the securing band 115, is substantially L-shape. The securing bands 115 are placed to cover the four corners of each battery cell 52 and the corners of the front and rear end plates 107. Furthermore, the front ends of the securing bands 115 are fixed to the front end plate 107, and the rear ends of the securing bands 115 are fixed to the rear end plate 107. At this time, the front-to-rear length of each securing band 115 is slightly longer than that in a free state. In other words, the securing bands 115 apply a force to the front and rear end plates 107 in a direction to compress the battery stack 105 in the front and rear direction. As a result, the battery stack 105 is firmly sandwiched by the front and rear end plates 107, and the upper and lower cured adhesives 63 fix the battery cells 52, the insulating members 56, 56E, and the upper and lower fluid storage cases 112 to each other. Therefore, the battery cells 52 and the insulating members 56, 56E that make up the battery stack 105 are held in an integrated state.

As shown in FIG. 6, the support brackets 120 made of metal are mounted on the upper surfaces of the front and rear support members 30. The side shape of each of the front and rear support brackets 120 is a substantially V-shape, and the front and rear support brackets 120 are symmetrical with each other in the front and rear direction. The support bracket 120 has a substantially horizontal first end 121 that makes up the lower end of the support bracket 120, a central part 122, and a substantially horizontal second end 123 that makes up the upper end of the support bracket 120. Each of the first end 121, the central part 122, and the second end 123 has a through-hole (not shown). A weld nut 133 is provided on the lower surface of the second end 123. The first ends 121 of the front and rear support brackets 120 are respectively mounted on the upper surfaces of the front and rear support members 30. The through-holes of the first ends 121 communicate with the internal threaded holes 31 of the support members 30 in the up and down direction.

As shown in FIG. 6, bolts 125 that are integrally molded products made of metal are respectively inserted from above into the through-holes of the first ends 121 of the front and rear support brackets 120. Each of the bolts 125 has a cylindrical head 126 and an external threaded part 127 that extends linearly downward from the head 126. The external threaded part 127 of each bolt 125 passes through the through-hole of the first end 121 and is screwed into the corresponding internal threaded hole 31, and the head 126 is pressed against the upper surface of the first end 121. As a result, the front and rear support brackets 120 are respectively fixed to the front and rear support members 30.

The integrated product of the battery stack 105, end plates 107, adhesives 63, and heat exchangers 110 is disposed between the front and rear support brackets 120, and the central parts 122 of the front and rear support brackets 120 contact with the corresponding end plates 107. Furthermore, the external threaded parts 131 of the bolts 129 made of metal pass through the through-holes provided respectively at the central parts 122 of the support brackets 120. The external threaded parts 131 are screwed into the internal threaded holes 108 of the corresponding end plates 107, and the heads 130 of the bolts 129 are pressed against the corresponding central parts 122. As a result, the integrated product of the battery stack 105, end plates 107, adhesives 63, and heat exchangers 110 is supported by the front and rear support brackets 120.

The adhesive 75 is applied to almost the entire upper surface of the upper fluid storage case 112 of the battery module 103.

The battery module 135 includes a battery stack (second battery stack) 137, a pair of front and rear end plates (second end plates) 107, four securing bands 115, adhesives 63, a pair of upper and lower heat exchangers (second heat exchanger) 138, a pair of front and rear support brackets (first fixing member) (second fixing member) 120, bolts 140, and bolts 144.

The battery stack 137 includes a plurality of battery cells (second battery cells) 52 arranged in the front and rear direction, a plurality of insulating members 56 each provided between any adjacent battery cells 52, and a plurality of busbars.

The heat exchanger 138 includes a fluid storage case (second case) 112 that is an integrally molded product made of metal. One ends of tube members (not shown) are connected to the front end openings and rear end openings of the internal channels 68 of the fluid storage case 112, and the other ends of the tube members are connected to an electric pump (not shown) and a temperature regulator (not shown). Furthermore, the internal channels 68 and the insides of the tube members are filled with a refrigerant that is a non-conductive liquid.

The battery stack 137, end plates 107, adhesives 63, and heat exchangers 138 of the battery module 135 are integrated in the same manner as the battery module 103.

As shown in FIG. 6, the first ends 121 of the front and rear support brackets 120 of the battery module 135 are respectively mounted on the upper surfaces of the second ends 123 of the front and rear support brackets 120 of the battery module 103.

The bolts 140 made of metal are respectively inserted from above into the through-holes of the first ends 121 of the front and rear support brackets 120 of the battery module 135. Each of the bolts 140 has a cylindrical head 141 and an external threaded part 142 that extends linearly downward from the head 141. The external threaded part 142 of each bolt 140 passes through the through-hole of the first end 121 and the through-hole of the second end 123 of the corresponding support bracket 120 of the battery module 103, and is screwed into the weld nut 133. As a result, the front and rear support brackets 120 of the battery module 135 are respectively fixed to the front and rear support brackets 120 of the battery module 103.

Furthermore, the integrated product of the battery stack 137, end plates 107, adhesives 63, and heat exchangers 138 of the battery module 135 is disposed between the front and rear support brackets 120, and the central parts 122 of the front and rear support brackets 120 contact with the corresponding end plates 107. Furthermore, the external threaded parts 146 of the bolts 144 made of metal respectively pass through the through-holes provided in the central parts 122 of the front and rear support brackets 120, the external threaded parts 146 are respectively screwed into the internal threaded holes 108 of the corresponding end plates 107, and the heads 145 of the bolts 144 are pressed against the corresponding central parts 122. As a result, the integrated product of the battery stack 137, end plates 107, adhesives 63, and heat exchangers 138 is supported by the front and rear support brackets 120 of the battery module 135. Furthermore, the lower surface of the fluid storage case (second case) 112 of the lower heat exchanger 138 of the battery module 135 is fixed to the adhesive 75. In other words, the battery module 103 and the battery module 135 are fixed to each other by the adhesive 75.

### Operation and Advantageous Effects

Next, the operation and advantageous effects of the second embodiment will be described.

In the second embodiment as well, for example, when one of the battery cells 52 of the battery stack 105 of the battery module 103 increases in temperature due to internal short-circuit, heat generated in the battery cell 52 is more easily transferred to the battery module 135 through the adhesive 75 than to the insulating members 56 adjacent to the battery cell 52. In addition, for example, when one of the battery cells 52 of the battery stack 137 of the battery module 135 increases in temperature due to internal short-circuit, heat generated in the battery cell 52 is more easily transferred to the battery module 103 through the adhesive 75 than to the insulating members 56 adjacent to the battery cell 52. In other words, the battery apparatus 100 of the second embodiment is also capable of making it difficult for heat generated in the battery cells 52 of the battery module 103 to be transferred to the other battery cells 52 of the battery module 103, and is also capable of making it difficult for heat generated in the battery cells 52 of the battery module 135 to be transferred to the other battery cells 52 of the battery module 135.

Furthermore, part of the heat not absorbed by the heat exchangers 110 of the battery module 103 and the heat exchangers 138 of the battery module 135 is transferred from each of the heat exchangers 110, 138 to the pair of front and rear end plates 107. The heat capacity of the end plate 107 is greater than the heat capacity of the insulating member 56. Therefore, each of the end plates 107 can receive a significant amount of heat from the heat exchangers 110, 138. Furthermore, heat transferred to the end plates 107 is dissipated from the end plates 107.

Furthermore, heat transferred to the end plates 107 is transferred to the support brackets 120, and is dissipated from the support brackets 120.

Furthermore, heat transferred to the support brackets 120 of the battery module 103 is transferred to the pair of front and rear support members 30 that are part of the lower case 24, and then further transferred from the support members 30 to the lower case 24 having a large heat capacity. Furthermore, the lower case 24 dissipates part of the heat to the outside.

The battery apparatus according to the first embodiment and the battery apparatus according to the second embodiment have been described above. These can be modified in design as needed without departing from the scope of the invention.

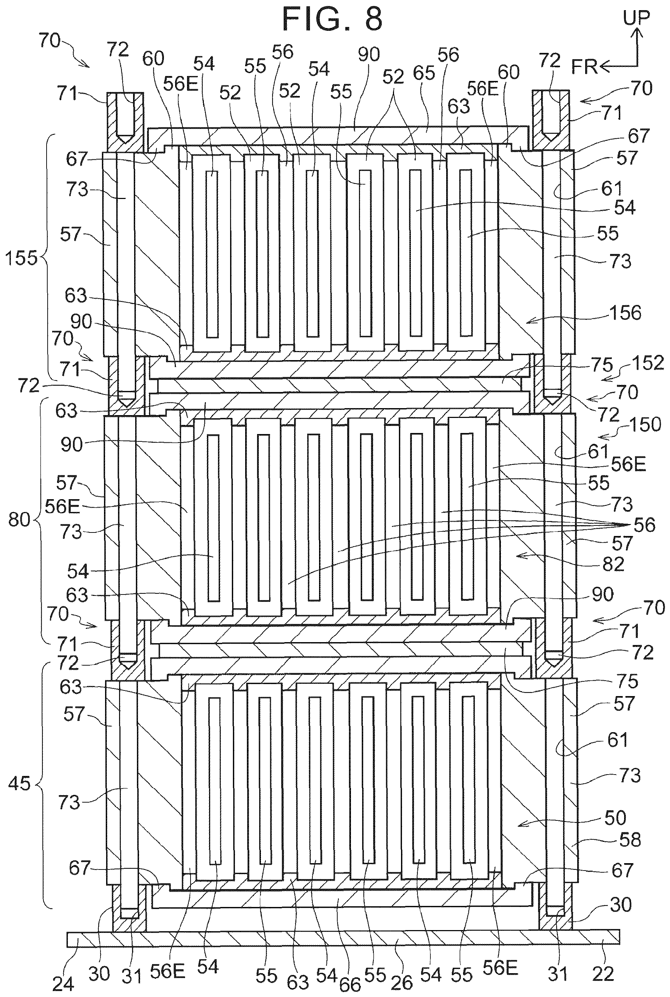

For example, the present invention may be implemented in the form of a first modification shown in FIG. 8. The first modification is a variation of the first embodiment. A battery pack 152 of a battery apparatus 150 of the first modification includes a battery module 155 with substantially the same configuration as the battery module 80 in addition to the battery module 45 and the battery module 80. The battery module 155 is provided directly on the battery module 80. The mode of connection between the battery module 80 and the battery module 155 is the same as the mode of connection between the battery module 45 and the battery module 80. The first modification is larger in the number of battery cells 52 than the first embodiment, so it is possible to increase the battery capacity of the battery apparatus 150.

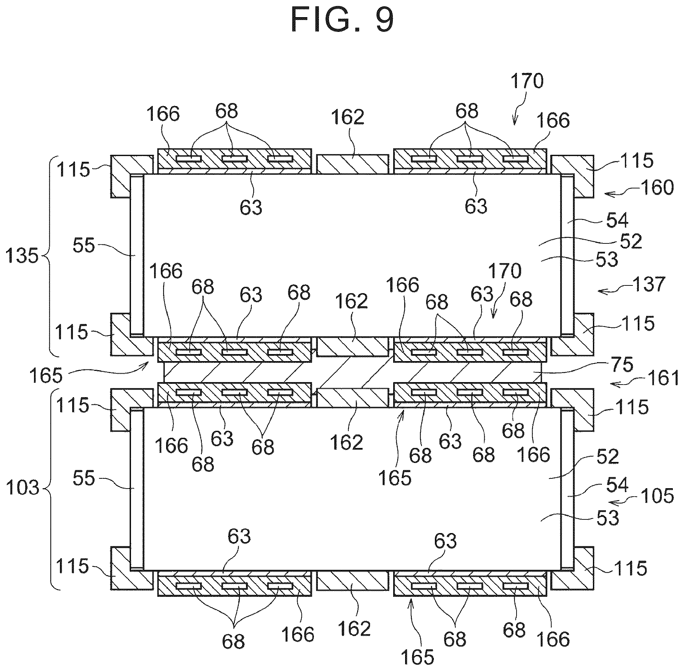

The invention may be implemented in the form of a second modification shown in FIG. 9. The second modification is a modification of the second embodiment. A battery module 103 and battery module 135 of a battery pack 161 of a battery apparatus 160 of the second modification includes two securing bands 162 made up of metal plates in addition to the four securing bands 115. In the battery module 103, the two securing bands 162 connect the central parts, in the right and left direction, of the upper ends and lower ends of the front and rear end plates 107 (not shown in FIG. 9). In the battery module 135, the two securing bands 162 connect the central parts, in the right and left direction, of the upper ends and lower ends of the front and rear end plates 107 (not shown in FIG. 9). Each of the heat exchangers (first heat exchanger) 165 of the battery module 103 includes a pair of right and left fluid storage cases 166 positioned on both sides of the securing band 162. A plurality of internal channels 68 penetrates through each fluid storage case 166 that is a thick plate-shaped member in the front and rear direction. Each of the heat exchangers (second heat exchanger) 170 of the battery module 135 includes a pair of right and left fluid storage cases 166 positioned on both sides of the securing band 162. Furthermore, the battery stack 105 and fluid storage cases 166 of the battery module 103 and the battery stack 137 and fluid storage cases 166 of the battery module 135 are fixed by adhesives 63. Furthermore, the upper-side securing band 162 and fluid storage cases 166 of the battery module 103 and the lower-side securing band 162 and fluid storage cases 166 of the battery module 135 are fixed by an adhesive 75. Furthermore, although not shown in the drawing, the battery module 103 and the battery module 135 are connected to each other using the support brackets 120. Each of the battery module 103 and the battery module 135 of the second modification includes six securing bands 115, 162, so the front and rear end plates 107 can apply a stronger force to the battery stack 105 or the battery stack 137 than a force in the second embodiment.

The battery apparatus (battery pack) of each of the embodiments and modifications may include four or more battery modules arranged in one direction.

The arrangement direction of a plurality of battery modules in the battery apparatus (battery pack) of each of the embodiments and modifications may be a direction different from the up and down direction. For example, the arrangement direction of a plurality of battery modules may be the right and left direction.

Each of the battery modules of each of the embodiments and modifications may include a plurality of battery stacks arranged in a direction orthogonal to the arrangement direction of the battery cells.

The heat conductive member provided between adjacent battery modules may be different from the adhesive 75. For example, the heat conductive member may be a metal plate having a coefficient of thermal conductivity higher than that of the adhesive 63 and the heat exchanger.

A solid electrolyte may be provided instead of a liquid electrolyte (electrolytic solution) inside the battery cells 52 of each of the embodiments and modifications. When each of the battery cells 52 has a solid electrolyte, a securing force to be applied from the end plates to the battery cells 52 increases compared to when each of the battery cells 52 has a liquid electrolyte. Therefore, when each of the battery cells 52 has a solid electrolyte, it is preferable to use a securing member 65 wider (in left-to-right dimension) and thicker than the securing bands 115, 162 to secure the battery cells 52.

## Claims

1. A battery apparatus (20; 100; 150; 160) comprising:
a first battery module (45; 103) including a first battery stack (50; 105) having a plurality of first battery cells (52) stacked in a predetermined direction, and a first heat exchanger (64; 110; 165) configured to exchange heat with the first battery stack (50; 105);
a second battery module (80; 135) including a second battery stack (82; 137) having a plurality of second battery cells (52) stacked in the predetermined direction; and
a heat conductive member (75) configured to be in contact with the first heat exchanger (64; 110; 165) and the second battery module (80; 135).

2. The battery apparatus (20; 100; 150; 160) according to claim 1, wherein:
the second battery module (80; 135) includes a second heat exchanger (90; 138; 170) configured to exchange heat with the second battery stack (82; 137); and
the heat conductive member (75) is configured to be in contact with the first heat exchanger (64; 110; 165) and the second heat exchanger (90; 138; 170).

3. The battery apparatus (20; 100; 150; 160) according to claim 1 or 2, wherein:
the first battery module (45; 103) includes a pair of first end plates (57; 107) respectively disposed on both ends of the first battery stack (50; 105);
the first battery cells (52) are sandwiched by the pair of first end plates (57; 107); and
the first heat exchanger (64; 110; 165) is connected to each of the pair of first end plates (57; 107).

4. The battery apparatus (20; 100; 150; 160) according to claim 3, wherein:
the first heat exchanger (64; 110; 165) includes a first case (65; 112; 166) made of metal and a first refrigerant flowing within the first case (65; 112; 166); and
both ends of the first case (65; 112; 166) are respectively connected to the pair of first end plates (57; 107).

5. The battery apparatus (20; 100; 150; 160) according to claim 3, further comprising a battery case (22) configured to house the first battery module (45; 103) and the second battery module (80; 135), wherein
the first end plates (57; 107) are connected to the battery case (22).

6. The battery apparatus (20; 100; 150; 160) according to claim 3, wherein:
the second battery module (80; 135) includes a pair of second end plates (57; 107) respectively disposed on both ends of the second battery stack (82; 137);
the second battery cells (52) are sandwiched by the pair of second end plates (57; 107); and
the pair of second end plates (57; 107) is respectively connected to the pair of first end plates (57; 107).

7. The battery apparatus (20; 100; 150; 160) according to claim 6, wherein:
the second battery module (80; 135) includes a second heat exchanger (90; 138; 170) configured to exchange heat with the second battery stack (82; 137);
the second heat exchanger (90; 138; 170) includes a second case (65; 112; 166) made of metal and a second refrigerant flowing within the second case (65; 112; 166); and
both ends of the second case (65; 112; 166) are respectively connected to the pair of second end plates (57; 107).

8. The battery apparatus (20; 100; 150; 160) according to claim 4, wherein each of the first battery cells (52) has a solid electrolyte.

9. The battery apparatus (20; 100; 150; 160) according to claim 7, wherein each of the second battery cells (52) has a solid electrolyte.

10. The battery apparatus (20; 100; 150; 160) according to claim 6, wherein:
the first battery module (45; 103) and the second battery module (80; 135) are arranged in an orthogonal direction orthogonal to the predetermined direction; and
the battery apparatus (20; 100; 150; 160) further comprises:
a first fixing member (70; 120) configured to fix one of the first end plates (57; 107) and one of the second end plates (57; 107), facing in the orthogonal direction; and
a second fixing member (70; 120) configured to fix the other one of the first end plates (57; 107) and the other one of the second end plates (57; 107), facing in the orthogonal direction.

11. The battery apparatus (20; 100; 150; 160) according to claim 1 or 2, wherein the heat conductive member (75) is an adhesive.
